# EUROPEAN PATENT SPECIFICATION

(11) **EP 2 465 783 B1**
(45) Date of publication and mention of the grant of the patent: **06.11.2013**
(21) Application number: 10195415.4
(22) Date of filing: 16.12.2010
(51) Int. Cl.: B65B 35/26, B65B 35/58, B65G 47/248

(54) **Machine for packaging articles**
Maschine zum Verpacken von Gegenständen
Machine pour emballer des articles

(43) Date of publication of application: 20.06.2012
(73) Proprietor: Ambrine Partners Limited, Dubai (AE)
(72) Inventor: Zigerlig, Max, 04551-060 Sao Paulo-SP (BR)
(74) Representative: Zardi, Marco

(56) References cited:
- DE-A1- 3 227 950
- GB-A- 961 743
- GB-A- 2 290 221

## Description

### Field of application

The present invention refers to the field of packaging of articles conveyed by auger or worm screw systems. The invention in particular is applicable to the field of packaging machines for handling essentially axial-symmetric and tapered-shaped articles, for example conical, pyramidal, frusto-conical or frusto-pyramidal; an example of such articles is represented by containers or cups for yoghurt, ice-creams or the like, or by the known capsules for preparing coffee or the like.

### Prior art

Use of auger conveyor systems is known in the packaging machines industry. Such conveyor systems are particularly adapted to obtain a linear advancement of articles. The conveying member called auger or "timing screw" generally comprises a shaft with a helix having a suitable pitch. The pitch of the helix substantially corresponds to the dimension of each article so that one of the articles is housed in the pitch of the helix. The rotation of the shaft allows the helix to impart a desired linear advancement movement to the articles. Furthermore, the auger confers a precise spacing between the articles, called "pitch".

Auger systems can be used, for example, for moving axial-symmetric articles with a tapered shape starting from a wider base up to a narrow end, or vice versa. Examples of such articles are represented by ice-cream cups, yogurt containers, etc..., as well as recently by capsules for preparing coffee or the like, for which the auger conveyor systems are being widely used.

It is known that the shape of such articles, required by functional and/or production and/or marketing needs, is not ideal for packaging when the products are arranged simply adjacent to each other. In order to optimise the space available in a packaging, it is known that some of the articles are conveniently turned by 180 degrees, so as to allow a more compact packaging and reduce the waste of space.

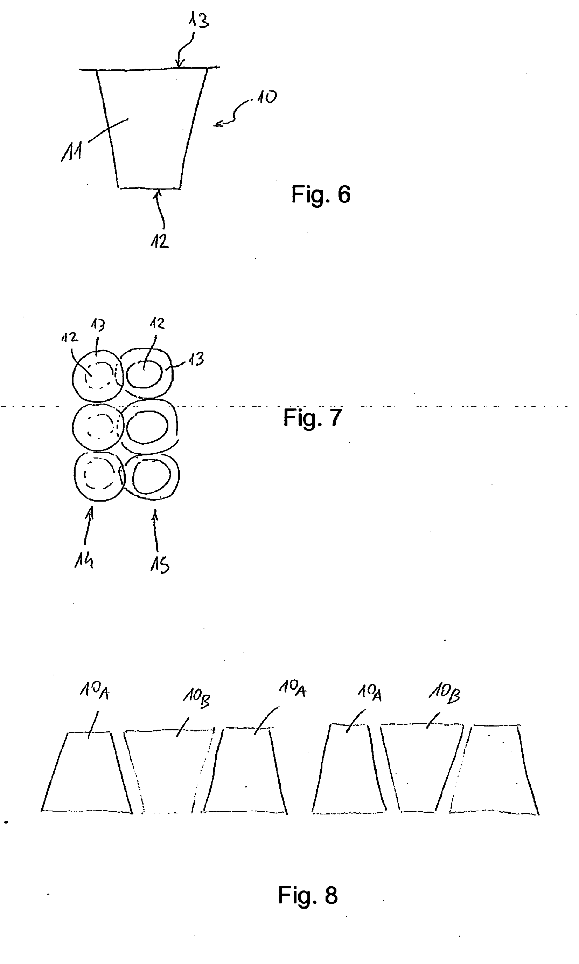

As an example, in the attached Fig 6 a frusto-conical-shaped article 10, for example a coffee capsule, is illustrated, having a body 11 delimited by a base 12 and by a cover 13 which can be sealed with an aluminium film or any other material. In order to optimise the use of the available space, it is known to package an article thus configured according to the pattern of Fig 7, i.e. in two or more adjacent rows, in which a row 14 of articles is turned by 180 degrees with respect to an adjacent row 15. It is understood that this arrangement allows an efficient compacting of the articles and saving space width-wise. In some cases, the need of overturning articles or rows of articles may arise from technical reasons, for example preventing or reducing the risk of damaging the articles.

However, the articles are received at the inlet of the packaging machine according to an arrangement which, usually, is simply aligned and with all the articles facing the same direction. For example, referring to Fig 6 once again, a machine for packaging coffee capsules receives the capsules aligned in row on a track or conveyor belt, all facing the same direction with the cover 13 facing upwards.

Thus, there arises the technical problem of arranging the articles according to the desired special orientation for packaging purposes. In other words, the packaging machine should be capable of turning some of the articles by 180 degrees, for example to achieve an alternating rows arrangement such as that of Fig 7, or any other arrangement suitable for packaging. All this should occur with the speed and reliability required to meet large production volumes.

The prior art has not yet provided for systems that are sufficiently accurate and fast to overcome this drawback.

### Summary of the invention

The invention has the object of overcoming the aforementioned drawback. Such object is attained by means of a machine for packaging articles comprising at least one conveyor auger fed with said articles, in which the articles conveyed by the auger are aligned forming a row on one side of the auger, the machine being characterised by a section for selectively overturning said articles, comprising at least one rotary member synchronised with said auger, in which the contact between an article and the rotary member causes overturning of the article on the opposite side of the auger, said rotary member selectively operating on a sub-group of the articles forming said row, obtaining two rows on opposite sides of the auger downstream of the section for selectively overturning, the articles of one row being overturned with respect to the articles of the other row.

The term "auger" is used to indicate a per se known conveying member, comprising a helical surface with a pitch suitable for conveying said articles. In particular, each article loaded into the auger is housed within the pitch of the auger. The movement and tilting of the article occurs within the space defined between crests of the helical surface spaced by a pitch. Said conveying member is also known as a timeless screw or simply screw.

The overturn of the article can substantially be schematized as a rotation around the axis of the auger, following the helical profile of the some auger. Said rotation is combined with the translation movement. The article, while advancing, rotates along the helix turning by 180 degrees with respect to the original position of loading onto the auger.

Preferably, the selective overturning section comprises at least one static member which cooperates with said rotary member. More advantageously, said static member is a pilot guide which imparts to the articles a rotation by a first angle with respect to the axis of the auger. Such rotation prepares the article for possible contact with an eccentric of the rotary member.

The rotary member is arranged beside the auger, and operates on a sub-group of the conveyed articles due to synchronisation with the auger. In a preferred embodiment, the rotary member is synchronised to cause the overturning of a predetermined percentage of articles, for example overturning 50% of the articles, alternated with the remaining 50% which maintains its original position. In other words the rotary member overturns one article but not the following one, thus obtaining the two parallel rows mentioned above.

In other embodiments of the invention, the rotary member is synchronised to cause the overturning of a different percentage of articles, depending on the required packaging configuration. For example, the rotary member can be synchronized for overturning one article out of three, two articles out of three, or any other pattern. In other words, the logic of intervention of the rotary member, and the relative synchronisation with the conveying of articles, are correlated to the required packaging pattern.

Advantageously, the rotary member is formed as a disc having at least one projecting cam or lobe intended for contact with the articles. Preferably, it comprises two diametrically opposite eccentrics, thus allowing reducing the speed of rotation for a given workload.

The rotary member has a continuous motion which can be uniform or non-uniform. In particular, the rotational speed of said rotary member can be constant or variable. In one of the aspects of the invention, said speed is variable and in particular increases upon contact and pressure on the article, and reduces during the repositioning travel up to the subsequent contact with another article. The speed can be controlled electronically.

The term "articles" is used to indicate articles that can be guided into an auger, preferably axially-symmetric tapered-shaped and more preferably substantially conical, pyramidal, frusto-conical or frusto-pyramidal shaped. A particularly preferred application consists in handling coffee capsules.

An aspect of the invention also consists in a method for packaging articles according to what has been described previously.

The advantages of the invention lie in the speed and accuracy, deriving from the rotary motion of the cam member synchronised with the conveyor auger. Starting from a row of simply aligned articles, all facing the same direction, it is possible to obtain on the same auger two rows of articles respectively turned by 180 degrees, which can for example be arranged adjacent to each other in a package or otherwise loaded in a packaging, thus optimizing the available space. It should be observed that the invention does not interfere with the normal transport of the articles, it does not slow the auger, and it operates continuously synchronised with the auger. Furthermore, it does not require a particular construction complication and thus it brilliantly overcomes the aforementioned technical drawback. In particular, it should also be observed that the rotary motion of the cam member allows attaining high operational speeds in synchronisation with the system for conveying the articles. The machine itself may also be configured for different arrangements of the articles, thus determining the suitable synchronisation between the rotary member and infeed of the articles.

Such advantages are generally felt in the packaging industry, and especially in handling articles such as coffee capsules characterized by high production volumes. Furthermore, this industry has a strongly growing demand and thus the demand for packaging machines also requires higher and higher speed. Other preferred applications regard handling containers or cups, especially in the food production industry.

### Brief description of the drawings

Fig 1 is a perspective view of some elements of a machine for packaging articles according to a preferred embodiment of the invention, namely a machine for packaging capsules containing coffee powder.
Fig 2 is a side view of the same elements of Fig 1.
Fig 3 is a top view of the same elements of Fig 1.
Fig 4 is a front view of the elements of Figs 1-3.
Fig 5 is a cross-section according to the plane V-V of Fig 2.
Fig 6 shows, by way of example, an article which can be fed into the machine of Fig 1.
Fig 7 is a top view of an arrangement of articles which can be advantageously obtained using a machine according to the invention.
Fig 8 is an exemplifying diagram of one of the possible arrangements of articles that can be used in combination with the invention.

### Detailed description of the invention

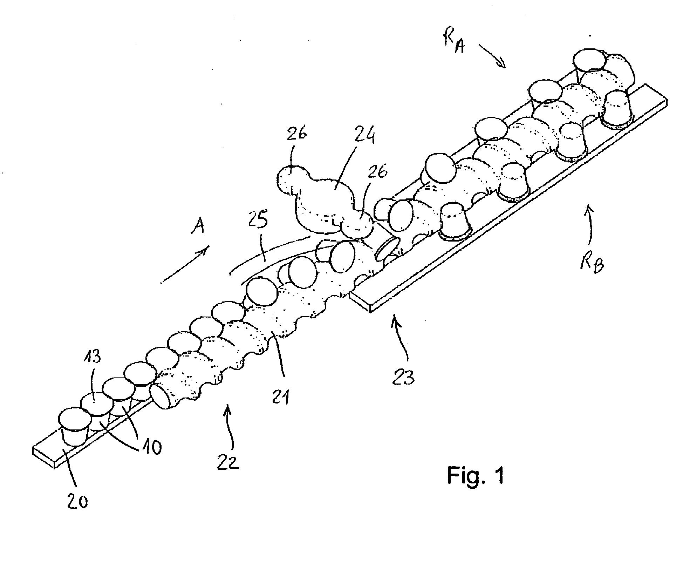

Fig 1 shows some essential elements of a part of a machine for packaging coffee capsules operating according to an embodiment of the invention. The articles are represented, in this example, by capsules 10 which are fed to an inlet section of the machine by means of a track 20. All the capsules facing the same direction, with the cover 13 facing upwards. Usually, the track 20 is not part of the machine.

In a product inlet section 22, the capsules 10 are loaded and pitched by an auger 21. The capsules are arranged forming a row on one side of the auger. With respect to the direction of advancement A, said side is the left side in Fig 1. The pitch of the auger substantially corresponds to the overall dimension of a capsule, in particular it is correlated to the diameter of the cover of the capsules, thus obtaining the desired pitching effect.

The inlet section 22 is followed by a selective overturning section 23, which comprises at least one cam rotary member 24.

Said member 24 rotates in a plane parallel to the product advancement direction A imparted by the auger 21. In other words, the rotational axis of the member 24 is skewed with respect to the axis of the auger 21. The rotary member 24 is positioned beside the auger 21 and it is driven by a motor which is preferably controlled electronically.

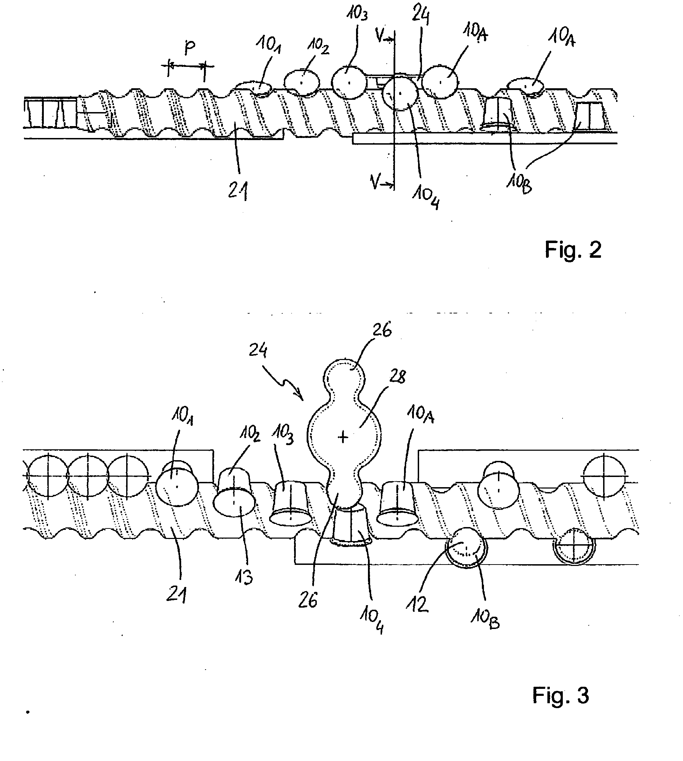

The rotary member 24, in a preferred embodiment, comprises a disc body 28 and at least one cam or eccentric lobe 26. Said at least one eccentric rotates on a circumference which, seen in plan view (Fig 3) interferes with the auger 21. Thus, the lobe 26 is capable of impacting the capsules 10 conveyed by the auger.

Advantageously, said lobe 26 is shaped as a disc smaller than the disc 28. The two parts 26 and 28 are connected with rounded edges. In the example, the rotary member 24 has two diametrically opposite lobes 26.

Advantageously the section 23 also comprises a fixed guide 25 upstream of the rotary member 24, with respect to the direction A of advancement. Said guide 25 has the function of preparing the capsules 10 to the contact with one of the eccentric lobes 26 of the rotary member 24. In particular the guide prepares the base 12 of a capsule to the contact with one of said lobes 26.

Said overturning section 23 operates as follows. A capsule 10 due to the guide 25 rotates around the axis of the auger 21, still remaining within the respective pitch "p" of the auger itself, indicated in Fig 2, and simultaneously to the advancement in direction A. The rotation of the capsule imparted by the guide 25 is exemplified in Figs 2 and 3 with the positions 10₁, 10₂ and 10₃ progressively assumed by an advancing capsule 10, due to the presence of the guide 25.

Upon passage beside the cam member 24, a capsule is in the position 10₄ of the figure. In such position, the contact with the cam 26 and more in detail the contact between the cam 26 and the base 12 of the capsule 10₄ causes the turning of the capsule on the opposite side of the auger. In particular, the edge of the cam 26 comes to contact with the base 12 of the capsule, already raised and rotated by the guide 25. The cam 26 rotatably pushes the capsule sliding it on the opposite side of the auger 21, with the base 12 now facing upwards, reversed with respect to the initial conveying position.

A capsule that does not come to contact with the cam 26, instead, returns to the initial position due to its weight or possibly due to a supplementary guide. The rotation of the disc 24 is synchronized with the speed of the auger 21, so that a capsule alternatingly eludes the cams 26, the subsequent capsule instead comes to contact with a cam 26 with ensuing overturning and so on. Thus, 50% of the capsules alternatingly pass on the other side of the auger 21 reversed, i.e. with the base 12 facing upwards and the cover 13 downwards.

Downstream of the section 23 two rows RA, RB, respectively of "straight" capsules 10A and "reversed" capsules 10B are obtained. The capsules of the row RA face the same direction as the feeding (cover 13 upwards), whereas the capsules of the row RB face the opposite direction with cover downwards and base 12 facing upwards. The capsules can thus be loaded packaged in the condition of Fig 7.

In Fig 2-3, the capsule indicated as 10₄ will be overturned forming one of the capsules 10B of the row RB; thus the capsule 10₃ will pass freely beyond the rotary member 24, returning to the row RA; the capsule 10₂ will once again come into contact with one of the lobes 26, after a half turn of the rotary member 24, thus ending up in the row RB.

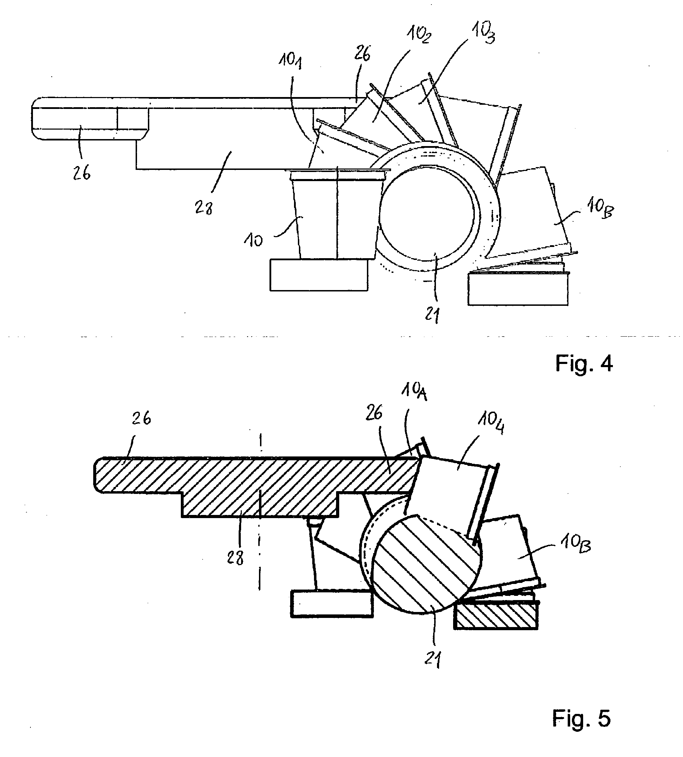

In Figs 4 and 5 the direction of advancement A (axis of the auger 21) is within the drawing plane; the positions of the incoming capsules 10 and of a capsule 10₄ at a position of contact with one of the cams 26 are exemplified once again.

It can be observed that the capsules 10A and respectively 10B are spaced having a double pitch. The machine can comprise further means for compacting and restoring the pitch "p" of the capsules, downstream of the section 23, which are however not essential to the purposes of the invention.

The packaging loading and subsequent closure are carried out at downstream sections through per se known methods.

The previously represented example provides for the overturning of 50% of the articles, but different patterns can be provided for, depending on the type of packaging. For example Fig 8 schematizes a packaging pattern according to rows of three articles, which provides for overturning 1/3 of the articles (one is reversed and two are not). The application of the invention to other packaging patterns is thus clear to a man skilled in the art.

The invention as described attains the previously mentioned objects. It is clear that it can be subjected to construction variants, falling within the scope of protection defined by the attached claims.

Furthermore, it should be observed that the application of the invention is not limited to the field of coffee capsules alone, given that the same advantages are attained when handling articles of other types, whether in the food production industry or other fields. Therefore, references to coffee capsules or the like, though representing a particularly preferred embodiment, shall not be construed as use limitations.

## Claims

1. Machine for packaging articles (10) comprising at least one conveyor auger (21) fed with said articles, wherein the articles conveyed by the auger are aligned forming a row on one side of the auger, the machine being **characterised by** a section (23) for selectively overturning said articles, comprising at least one rotary member (24) with rotational motion synchronised with said auger, wherein the contact between an article (10) and said rotary member (24) causes overturning of the article on the opposite side of the auger (21), and wherein said rotary member, due to its rotational motion synchronised with the advancement of the auger, selectively operates on a sub-group of the articles conveyed by the auger, resulting in two rows of articles (RA, RB) arranged on opposite sides of the auger (21) downstream of said selective overturning section (23), wherein the articles of one row are overturned with respect to the articles of the other row.

2. Machine according to claim 1, said rotary member (24) being arranged beside the auger (21).

3. Machine according to claim 2, wherein the direction (A) of advancement of the articles is substantially horizontal, and said rotary member rotates in a horizontal plane parallel to said direction.

4. Machine according to claim 3, said rotary member being formed as a disc provided with at least one cam or lobe (26) in eccentric position.

5. Machine according to any one of the preceding claims, said rotary member being synchronised with said auger (21) for alternate overturning of a predetermined percentage of articles.

6. Machine according to any one of the preceding claims, said rotary member having a variable rotational motion with acceleration upon the contact with an article.

7. Machine according to any one of the preceding claims, wherein the selective overturning section comprises at least one static member which cooperates with said rotary member.

8. Machine according to claim 6, said static member being a pilot guide (25) positioned upstream of the rotary member (24), and which is configured to impart an article a rotation with respect to the axis of the auger, along the helical profiles of the auger itself, so as to prepare the article (10) to the contact with an eccentric cam or lobe (26) of said rotary member.

9. Use of a machine according to any one of claims 1 to 8, for packaging coffee capsules or similarly shaped containers.

10. Method for packaging articles (10) comprising a step of conveying said articles into an auger (21), wherein the articles conveyed by the auger are aligned forming a row on one side of the auger, the method being **characterised by** an operation for selectively overturning a sub-group of said articles, through contact with a rotary member (24) synchronised with said auger, obtaining two rows of articles (RA, RB) on opposite sides of the auger (21), the articles of one row being turned by 180 degrees with respect to the articles of the other row.

11. Method according to claim 10, said articles (10) being substantially axially-symmetric tapered-shaped.

12. Method according to claim 11, said articles being represented by substantially frusto-conical-shaped containers or cups, such as ice cream cups, yoghurt cups, or capsules for preparing coffee or the like.

## Patentansprüche

1. Maschine zum Verpacken von Gegenständen (10) umfassend mindestens eine Förderbandschnecke (21), die mit diesen Gegenständen versorgt wird, wobei die durch die Förderschnecke transportierten Gegenstände unter Ausbildung einer Reihe auf einer Seite der Förderschnecke ausgerichtet sind, wobei die Maschine **gekennzeichnet ist durch** einen Abschnitt (23) zum selektiven Kippen der Gegenstände, umfassend mindestens ein rotierendes Element (24) mit einer mit der Förderschnecke synchronisierten Rotationsbewegung, wobei der Kontakt zwischen einem Gegenstand (10) und dem rotierenden Element (24) ein Kippen des Gegenstandes auf die gegenüberliegende Seite der Förderschnecke (21) verursacht, und wobei das rotierende Element aufgrund seiner mit dem Fortschreiten der Förderschnecke synchronisierten Rotationsbewegung selektiv eine Teilgruppe der Gegenstände, die **durch** die Förderschnecke transportiert werden, bedient, so dass zwei Reihen von Gegenständen (RA, RB) angeordnet auf gegenüberliegenden Seiten der Förderschnecke (21) stromabwärts von dem ausgewählten Kippabschnitt (23) resultiert, wobei die Gegenstände auf einer Reihe in Bezug auf die Gegenstände der anderen Reihe gekippt werden.

2. Maschine gemäß Anspruch 1, wobei das rotierende Element (24) neben der Förderschnecke (21) angeordnet ist.

3. Maschine gemäß Anspruch 2, wobei die Richtung (A) des Fortschreitens der Gegenstände im Wesentlichen horizontal ist und das rotierende Element in einer horizontalen Ebene parallel zu dieser Richtung rotiert.

4. Maschine gemäß Anspruch 3, wobei das rotierende Element in Form einer Scheibe ausgebildet ist, die mit mindestens einer Nocke oder Keule (26) in außenmittigen Positionen versehen ist.

5. Maschine gemäß einem der vorhergehenden Ansprüche, wobei das rotierende Element mit der Förderschnecke (21) zum alternierenden Kippen von einem vorbestimmten Prozentsatz von Gegenständen synchronisiert ist.

6. Maschine gemäß einem der vorhergehenden Ansprüche, wobei das rotierende Element eine variable Rotationsbewegung mit Beschleunigung nach Kontakt mit einem Gegenstand aufweist.

7. Maschine gemäß einem der vorhergehenden Ansprüche, wobei der ausgewählte Kippabschnitt mindestens ein statisches Element umfasst, welches mit dem rotierenden Element zusammenwirkt.

8. Maschine gemäß Anspruch 6, wobei das statische Element eine Steuerführung (25) ist, die stromaufwärts von dem rotierenden Element (24) positioniert ist, und welche gestaltet ist, um einem Gegenstand eine Rotation in Bezug auf die Achse der Förderschnecke entlang der helikalen Profile der Förderschnecke selbst zu vermitteln, um so die Gegenstände (10) auf den Kontakt mit einer außenmittigen Nocke oder Keule (26) des Rotationselementes vorzubereiten.

9. Verwendung einer Maschine gemäß einem der Ansprüche 1 bis 8 zum Verpacken von Kaffeekapseln oder ähnlich geformten Behältern.

10. Verfahren zum Verpacken von Gegenständen (10) umfassend einen Schritt des Transportierens der Gegenstände in eine Förderschnecke (21), wobei die Gegenstände, die durch die Förderschnecke transportiert werden, unter Ausbildung einer Reihe auf einer Seite der Förderschnecke ausgerichtet werden, wobei das Verfahren durch einen Betrieb zum selektiven Kippen einer Teilgruppe der Gegenstände charakterisiert ist, wobei durch Kontakt mit einem rotierenden Element (24), das mit der Förderschnecke synchronisiert ist, zwei Reihen von Gegenständen (RA, RB) auf gegenüberliegenden Seiten der Förderschnecke (21) erhalten werden, wobei die Gegenstände auf einer Reihe um 180° in Bezug auf die Gegenstände der anderen Reihe gekippt sind.

11. Verfahren gemäß Anspruch 10, wobei die Gegenstände (10) im Wesentlichen eine axialsymmetrische konische Form aufweisen.

12. Verfahren gemäß Anspruch 11, wobei die Gegenstände durch im Wesentlichen frusto-konisch geformte Behälter oder Becher dargestellt werden, wie Eiskrembecher, Joghurtbecher oder Kapseln zur Herstellung von Kaffee oder ähnlichem.

## Revendications

1. Machine pour emballer des articles (10) comprenant au moins une vis sans fin de convoyeur (21) alimentée avec lesdits articles, dans laquelle les articles convoyés par ladite vis sans fin sont alignés en formant une rangée sur un côté de la vis sans fin, la machine étant **caractérisée par** une section (23) destinée à retourner de manière sélective lesdits articles, comprenant au moins un élément rotatif (24) ayant un mouvement de rotation synchronisé avec ladite vis sans fin, dans laquelle le contact entre un article (10) et ledit élément rotatif (24) provoque le retournement de l'article sur le côté opposé de la vis sans fin (21), et dans laquelle ledit élément rotatif, en raison de son mouvement de rotation synchronisé avec l'avancement de la vis sans fin, opère sélectivement sur un sous-groupe d'articles convoyés par la vis sans fin, ce qui résulte en deux rangées d'articles (RA, RB) disposées sur des côtés opposés de la vis sans fin (21) en aval de ladite section de retournement sélectif (23), dans laquelle les articles d'une première rangée sont retournés par rapport aux articles de l'autre rangée.

2. Machine selon la revendication 1, ledit élément rotatif (24) étant disposé à côté de la vis sans fin (21).

3. Machine selon la revendication 2, dans laquelle la direction (A) d'avancement des articles est globalement horizontale, et ledit élément rotatif tourne dans un plan horizontal parallèle à ladite direction.

4. Machine selon la revendication 3, ledit élément rotatif étant constitué d'un disque doté d'au moins une came ou d'au moins un lobe (26) dans une position excentrée.

5. Machine selon l'une quelconque des revendications précédentes, ledit élément rotatif étant synchronisé avec ladite vis sans fin (21) en vue du retournement alterné d'un pourcentage prédéterminé d'articles.

6. Machine selon l'une quelconque des revendications précédentes, ledit élément rotatif ayant un mouvement de rotation variable avec une accélération au moment du contact avec un article.

7. Machine selon l'une quelconque des revendications précédentes, dans laquelle la section de retournement sélectif comprend au moins un élément statique qui coopère avec ledit élément rotatif.

8. Machine selon la revendication 6, ledit élément statique étant un guide pilote (25) positionné en amont de l'élément rotatif (24), et qui est configuré pour donner à un article un mouvement de rotation par rapport à l'axe de la vis sans fin, le long des profiles hélicoïdaux de la vis sans fin elle-même, de façon à préparer l'article (10) au contact avec une came ou un lobe excentré (26) dudit élément rotatif.

9. Utilisation d'une machine selon l'une quelconque des revendications 1 à 8, destinée à l'emballage de capsules de café ou de contenants de forme similaire.

10. Procédé pour emballer des articles (10) comprenant l'étape consistant à convoyer lesdits articles sur une vis sans fin (21), dans lequel les articles convoyés par la vis sans fin sont alignés en formant une rangée sur un côté de la vis sans fin, le procédé étant **caractérisé par** une opération destinée à retourner de manière sélective un sous-groupes desdits articles, par un contact avec un élément rotatif (24) synchronisé avec ladite vis sans fin, en obtenant deux rangées d'articles (RA, RB) disposées sur des côtés opposés de la vis sans fin (21), les articles sur d'une première rangée étant tournés de 180° par rapport aux articles de l'autre rangée.

11. Procédé selon la revendication 10, lesdits articles (10) étant d'une forme conique globalement symétrique axialement.

12. Procédé selon la revendication 11, lesdits articles étant représentés par des contenants globalement tronconiques ou des coupelles, comme des pots de glace, des pots de yaourts, ou des capsules pour préparer du café ou autre.
